# EUROPÄISCHE PATENTSCHRIFT

(11) **EP 0 556 611 B1**
(45) Veröffentlichungstag und Bekanntmachung des Hinweises auf die Patenterteilung: **11.10.1995**
(21) Anmeldenummer: 93101281.9
(22) Anmeldetag: 28.01.1993
(51) Int. Cl.: B23Q 17/22, B23Q 16/00

(54) **Vorrichtung zur Einstellung eines zentrisch in einer Werkzeugspindel angeordneten und längs dieser verstellbaren Werkzeuganschlags.**
Device for adjusting an axially positionable tool locating piece which sits cetrally in a tool-driving spindle.
Dispositif pour le réglage d'une butée pour un outil, qui est située en position centrale dans une broche, le long de la broche.

(30) Priorität: 15.02.1992 DE 4204644
(43) Veröffentlichungstag der Anmeldung: 25.08.1993
(73) Patentinhaber: Heidelberger Druckmaschinen Aktiengesellschaft, D-69019 Heidelberg (DE)
(72) Erfinder: Schindler, Reinhard, W-7521 Kronau (DE); Börke, Hans-Jürgen, W-6900 Heidelberg (DE); Ehrenfeld, Otto, W-6900 Heidelberg (DE)
(74) Vertreter: Stoltenberg, Heinz-Herbert Baldo

(56) Entgegenhaltungen:
- DE-A- 3 300 877
- US-A- 2 043 613
- US-A- 2 778 651
- US-A- 3 047 959

## Beschreibung

Die Erfindung bezieht sich auf eine Vorrichtung zur Einstellung eines zentrisch in einer Werkzeugspindel angeordneten und längs dieser verstellbaren Werkzeuganschlags mittels eines anstelle eines Werkzeugschafts in die Werkzeugspindel einführbaren Stellmittels, wobei der Werkzeuganschlag eine Anschlagfläche für einen in die Werkzeugspindel einsetzbaren Werkzeugschaft aufweist.

Die Druckschrift US 2,778,651 A offenbart eine Werkzeugspindel mit einem zentrisch darin angeordneten und längs dieser verstellbaren Werkzeuganschlag mit einer Anschlagfläche für einen in die Werkzeugspindel einsetzbaren Werkzeugschaft. Dabei kann die Längsverstellung des Werkzeuganschlags mit Hilfe eines Stellmittels in Form eines Schraubendrehers vorgenommen wird, der anstelle eines Werkzeugschafts in die Werkzeugspindel einführbar ist.

Ein maßgenaues Einsetzen eines Werkzeugschafts, wie beispielsweise des Schafts eines Spiralbohrers, in eine solchermaßen mit einem Werkzeuganschlag ausgestattete Werkzeugspindel in dem Sinne, daß die Spitze des Spiralbohrers einen genau definierten Abstand von einem Bezugspunkt oder einer Bezugsebene einer die Werkzeugspindel aufweisenden Bearbeitungsmaschine einnimmt, erfordert ersichtlich ein wiederholtes Probieren derart, daß der Werkzeuganschlag mittels des anstelle des Werkzeugschafts in die Werkzeugspindel einführbaren Schraubendrehers verstellt, anschließend anstelle des Schraubendrehers der Werkzeugschaft in die Werkzeugspindel eingesetzt und die Position der Spitze des Spiralbohrers vermessen wird. Diese Prozedur muß nun so lange wiederholt werden, bis der genannte definierte Abstand erreicht ist. Die Notwendigkeit der Einhaltung des genannten Abstands ergibt sich insbesondere bei numerisch gesteuerten Bearbeitungsmaschinen. Eine hochgenaue Serienfertigung, bei welcher beispielsweise Mehrspindelbohrköpfe zum Einsatz kommen, setzt voraus, daß die Spitzen sämtlicher dabei verwendeter Bohrer exakt auf einen jeweiligen definierten Abstand im dargelegten Sinne eingestellt sind. Dabei ist aber die Stellung eines jeweiligen Werkzeuganschlags bezüglich der jeweiligen Werkzeugspindel insbesondere auch von der Gesamtlänge eines in die jeweilige Werkzeugspindel eingesetzten Bohrers abhängig, und diese Gesamtlänge kann unterschiedlich sein, je nach dem, ob in eine Werkzeugspindel ein noch unbenutzter oder ein nachgeschliffener Bohrer eingesetzt werden soll. Insgesamt ergibt sich somit bei einer Bestückung von Werkzeugspindeln mit entsprechenden Werkzeugen ein erheblicher Aufwand. Insbesondere muß zur Vermeidung eines längeren Produktionsausfalls infolge Bruchs eines Werkzeugs eine Bevorratung von Spindelköpfen vorgesehen werden.

Der Erfindung liegt die Aufgabe zugrunde, den Aufwand zur maßgenauen Bestückung einer Werkzeugspindel der eingangs genannten Art zu verringern.

Diese Aufgabe wird erfindungsgemäß mit einer im Anspruch 1 angegebenen Vorrichtung gelöst. Hierbei ist vorgesehen, daß das eingangs genannte Stellmittel in eine kombinierte Stell- und Meßeinrichtung integriert ist, welche in einer definierten Gebrauchslage bezüglich der Werkzeugspindel an dieser fixierbar ist. Ferner ist das Stellmittel derart in der Stell- und Meßeinrichtung aufgenommen, daß es in deren Gebrauchslage mit dem eingangs genannten Werkzeuganschlag in eine Wirkverbindung bringbar ist, wobei diese Wirkverbindung im Sinne einer Verstellung des Werkzeuganschlags längs der Werkzeugspindel bei einer Verstellung des Stellmittels besteht und das Stellmittel während des Bestehens der genannten Wirkverbindung an der eingangs genannten Anschlagfläche anliegt. In die Stell- und Meßeinrichtung ist ferner ein Tiefenmeßgerät integriert, mittels welchem in der Gebrauchslage am Werkzeuganschlag auftretende Verstellungen längs der Werkzeugspindel am Stellmittel abtastbar sind.

Mit Hilfe einer solchermaßen ausgebildeten Vorrichtung kann ein längs einer Werkzeugspindel verstellbarer Werkzeuganschlag mit wenigen Handgriffen so eingestellt werden, daß sich ein freies Ende eines bis zur Abstützung am Werkzeuganschlag in die Werkzeugspindel eingesetzten Werkzeugs von zuvor bestimmter Gesamtlänge mit hoher Genauigkeit in einem definierten Abstand zu einem bereits erläuterten Bezugspunkt oder zu einer entsprechenden Bezugsebene befindet.

Der Einsatz einer erfindungsgemäßen Vorrichtung erbringt für den Fall eines Werkzeugbruchs einen Zeitgewinn, der insbesondere im Falle von Bearbeitungsgängen mit Mehrspindelköpfen deren kostenträchtige Bevorratung in komplett bestückter Form unnötig macht.

Vorteilhafte Ausgestaltungen einer erfindungsgemäßen Vorrichtung sind in den Unteransprüchen angegeben.

Ein Ausführungsbeispiel einer erfindungsgemäßen Vorrichtung ist nachfolgend unter Bezugnahme auf die Figuren näher erläutert.

Hierin zeigen;
- Fig. 1: einen Schnitt durch eine erfindungsgemäße Vorrichtung in ihrer Gebrauchslage,

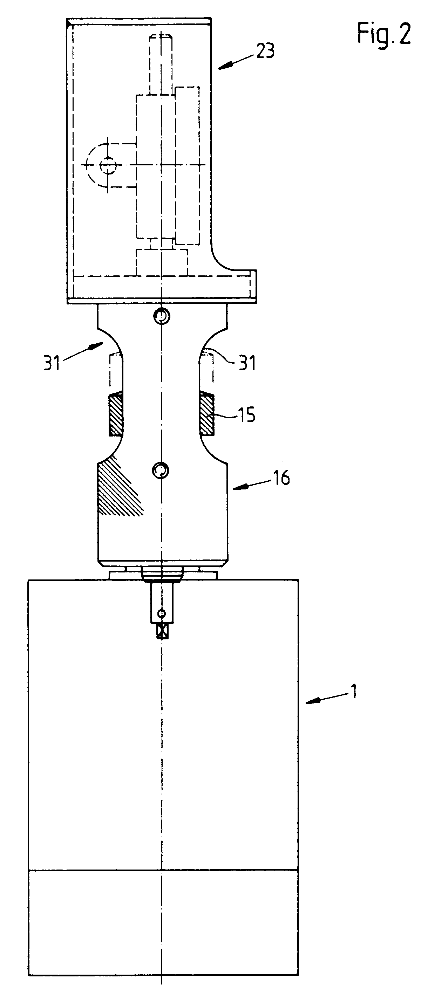

- Fig. 2: eine Seitenansicht der Vorrichtung gemäß Fig. 1.

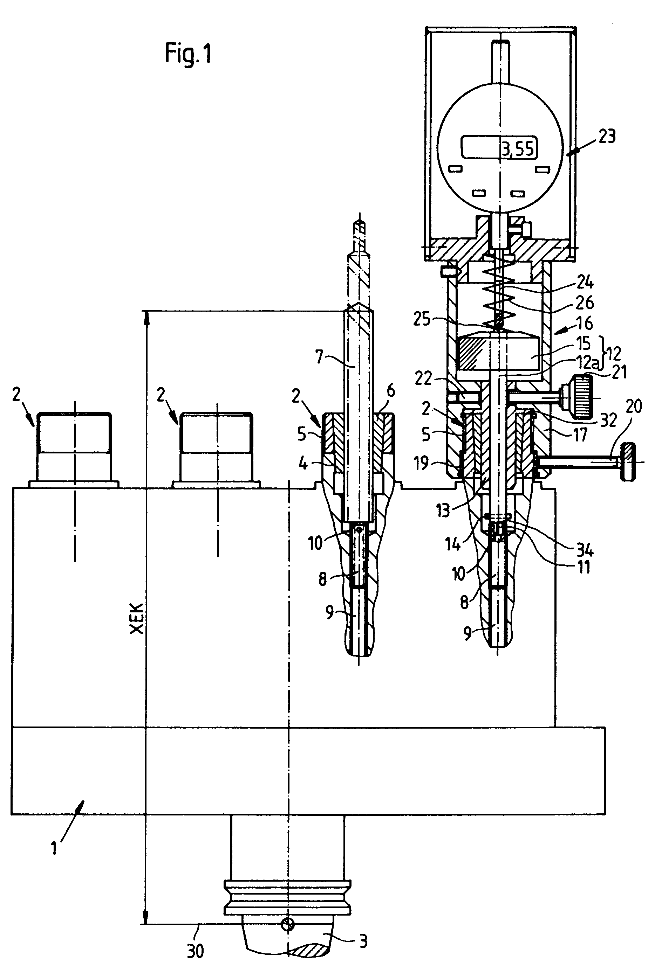

In den Figuren ist ein Mehrspindelbohrkopf 1 herkömmlicher Bauart mit den Werkzeugspindeln 2 angedeutet. Die Aufnahme des Mehrspindelbohrkopfs 1 in ein Bearbeitungszentrum zur NC-Bearbeitung erfolgt mittels einer lediglich in Figur 1 dargestellten Mehrspindelaufnahme 3 herkömmlicher Bauart.

Eine jeweilige Spindel 2 ist an ihrem vom Mehrspindelbohrkopf 1 wegweisenden freien Ende mit einem Innenkonus 4 herkömmlicher Art ausgestattet und mit einem Außengewinde 5 versehen. In den Innenkonus 4 ist eine herkömmliche Außenkonusspannhülse 6 in bekannter weise eingefügt. Konzentrisch zu dem Innenkonus 4, d. h. konzentrisch zur Längsachse der Werkzeugspindel 2, ist letztere mit einer Gewindebohrung 9 versehen. In diese ist ein Werkzeuganschlag 8 in Form eines Gewindestifts eingeschraubt, der mit einer in Richtung des freien Endes der Werkzeugspindel 2 weisenden Stirnfläche eine Anschlagfläche 10 für einen in die Werkzeugspindel 2 einsetzbaren Werkzeugschaft ausbildet.

Eine bezüglich der in Fig. 1 rechts außen befindlichen Werkzeugspindel 2 in ihrer Gebrauchslage dargestellte erfindungsgemäße Vorrichtung weist in deren unterem Bereich ein Gehäuse 16 mit einem hohlzylindrischen Anschlußstück 17 auf. Der Innendurchmesser des Anschlußstücks 17 ist dabei so dimensioniert, daß dessen Aufschieben auf die Werkzeugspindel 2 mit Spiel über deren Außengewinde 5 möglich ist. Im Gehäuse 16 ist konzentrisch zum Anschlußstück 17 eine Führungsbuchse 13 befestigt, welche das Anschlußstück 17 durchsetzt und einen Bereich mit einem derartigen Außendurchmesser aufweist, daß dieser Außendruchmesser und der Innendurchmesser der Außenkonusspannhülse 6 einen Schiebesitz bilden. In der Führungsbuchse 13 ist konzentrisch zur Achse der Werkzeugspindel 2 ein zylindrischer Schaft 12a eines Stellmittels 12 dreh- und axial verschiebbar aufgenommen, der mit einem oberen und einem unteren Schaftende aus dieser herausragt. Am oberen Schaftende ist ein Betätigungsteil 15 in Form eines Rändelkopfs befestigt, und am unteren Schaftende ist ein Außensechskantprofil 11 vorgesehen, welches mit einem konzentrischen Innensechskantprofil in dem mit einer Anschlagfläche 10 versehenen Kopfbereich des den Werkzeuganschlag 8 bildenden Gewindestifts korrespondiert. Hiermit sind an einander zugeordneten Enden des Schafts 12a und des Werkzeuganschlags 8 lösbare, formschlüssige Kuplungsmittel gebildet, mittels welcher eine Wirkverbindung im Sinne einer Verstellung des Werkzeuganschlags 8 längs der Werkzeugspindel 2 bei einer Verstellung des Stellmlttels 12 hergestellt ist.

An dem Gehäuse 16 ist ein digitales Tiefenmeßgerät 23 befestigt, dessen Taststift 24 konzentrisch zur Achse des Anschlußstücks 17 ausgerichtet ist und eine obere Stirnfläche des Betätigungsteils 15 kontaktiert. Die Funktion und der Aufbau des Tiefenmeßgerätes 23 sind herkömmlicher Art. Das Tiefenmeßgerät 23 ist hochauflösend und zweckmäßigerweise mit Datenspeichern versehen.

Zum Austausch eines Bohrers 7 gegen einen solchen anderer Länge wird eine nicht dargestellte überwurfmutter vom Außengewinde 5 der Werkzeugspindel 2 gelöst und entfernt. In bekannter Weise wird dabei die Spannverbindung zwischen Bohrer 7, Außenkonusspannhülse 6 und Innenkonus 4 der Spindel 2 gelöst. Sodann wird nach Entfernen des Bohrers 7 die Stell- und Meßeinrichtung in ihre Gebrauchslage verbracht. Hierzu wird das Anschlußstuck 17 auf die Werkzeugspindel 2 aufgeschoben bis die Werkzeugspindel 2 in Anschlag mit einer axialen Anschlagfläche 32 der Führungsbuchse 13 gerät. Mit Hilfe einer Klemmschraube 20 kann das Anschlußstück 17 über eine in dieses eingesetzte Klemmhülse 19 in der Gebrauchslage arretiert werden. Bedingt durch einen Kraftspeicher 26 in Form einer in Längsrichtung der Werkzeugspindel 2 wirksamen Druckfeder, die sich einerseits am Betätigungsteil 15 und andererseits an einem Federlager am Tiefenmeßgerät 23 abstützt, liegt das untere Schaftende des Schafts 12a hierbei gegebenenfalls zunächst an der Anschlagfläche 10 des Werkzeuganschlags 8 in Anschlag. Durch gegebenenfalls erforderliches Verdrehen des durch Ausnehmungen 31 im Gehäuse 16 zugänglichen Betätigungsteils 15 wird erreicht, daß sich das Außensechskantprofil 11 am unteren Schaftende und das Innensechskantprofil des Werkzeuganschlags 8 decken. Der Druckspeicher 26 bewirkt sodann, daß das Außensechskantprofil 11 am unteren Schaftende axial in das Innensechskantprofil des Werkzeuganschlags 8 eintaucht bis ein definierter Anschlag 34 am Stellmittel 12 an der Anschlagfläche 10 des Werkzeuganschlags 8 anliegt. Durch weiteres Verdrehen des Betätigungsteils 15 kann nun der Werkzeuganschlag 8 mit seiner Anschlagfläche 10 längs der Werkzeugspindel verstellt werden. Das Maß der Verstellung kann mit Hilfe des Taststifts 24 des Längenmeßgeräts 23 direkt ermittelt und angezeigt werden. Bei bekannter Bohrerlänge, die zuvor beispielsweise mit einem digitalen Meßgerät ermittelt wurde, und bei bekanntem, für die Bearbeitung mit einem Mehrspindelbohrkopf in einem NC-gesteuerten Bearbeitungszentrum vorgegebenem Sollmaß zwischen einer Bezugsebene 30 und der Spitze des Bohrers 7, in Figur 1 mit XEK bezeichnet, kann somit der die Einspannlänge des Bohrers 7 begrenzende Anschlag 10 exakt positioniert werden. Ist die gewünschte Einspannlänge erreicht, wird der Schaft 12a des Stellmittels 12 mittels des Betätigungsteils 15 entgegen der Federkraft des Kraftspeichers 26 verschoben, so daß das Außensechskantprofil 11 aus dem Wirkbereich des Innensechskantprofil des Werkzeuganschlags 8 tritt. Diese axiale Rückbewegung des Schafts 12a wird durch einen in diesen eingesetzten Anschlagstift 14 begrenzt, so daß zum einen der Schaft 12a nicht ungewollt aus der Führungsbuchse 13 entfernt werden kann, zum anderen eine Beschädigung des Tiefenmeßgerätes 23 durch ein zu weites Zurückziehen des Schafts 12a ausgeschlossen ist. Der Schaft 12a wird nach Verlassen des Bereichs des Innensechskantprofils des Werkzeuganschlags 8 mittels einer Arretierschraube 21 bezüglich der Führungsbuchse 13 arretiert. Nach Lösen der Klemmschraube 20 wird die Stell- und Meßeinrichtung von der Werkzeugspindel 2 entfernt. Der zuvor ausgemessene Bohrer, für den die Einspannlänge nun eingestellt ist, wird in üblicher Weise durch Einschub des Bohrers 7 in die Außenkonusspannhülse bis zum Anschlag 10 und durch anschließendes Verspannen mit der erwähnten (nicht dargestellten) überwurfmutter eingespannt. Ein derartiger Austausch eines Bohrers 7 kann an jeder Werkzeugspindel eines Mehrspindelbohrkopfs mit wenigen Handgriffen vorgenommen werden.

## Patentansprüche

1. Vorrichtung zur Einstellung eines zentrisch in einer Werkzeugspindel (2) angeordneten und längs dieser verstellbaren Werkzeuganschlags (8) mittels eines anstelle eines Werkzeugschafts in die Werkzeugspindel (2) einfünhrbaren Stellmittels (12), wobei der Werkzeuganschlag (8) eine Anschlagfläche (10) für einen in die Werkzeugspindel (2) einsetzbaren Werkzeugschaft aufweist,
**dadurch gekennzeichnet,** daß
- das Stellmittel (12) in eine kombinierte Stell- und Meßeinrichtung integriert ist, welche in einer definierten Gebrauchslage bezüglich der Werkzeugspindel (2) an dieser fixierbar ist,
- das Stellmittel (12) derart in der Stell- und Meßeinrichtung aufgenommen ist, daß es in deren Gebrauchslage mit dem Werkzeuganschlag (8) in eine Wirkverbindung im Sinne einer Verstellung des Werkzeuganschlags (8) längs der Werkzeugspindel (2) bei einer Verstellung des Stellmittels (12) bringbar ist,
- das Stellmittel (12) während des Bestehens der genannten Wirkverbindung an der Anschlagfläche (10) anliegt,
und
- in die Stell- und Meßeinrichtung ein digitales Tiefenmeßerät (23) integriert ist, mittels welchem in der Gebrauchslage am Werkzeuganschlag (8) auftretende Verstellungen längs der Werkzeugspindel (2) am Stellmittel (12) abtastbar sind.

2. Vorrichtung nach Anspruch 1,
**dadurch gekennzeichnet,**
daß die Stell- und Meßeinrichtung ein hohlzylindrisches Anschlußstück (17) aufweist, welches in der Gebrauchslage bis zu einem an der Stell- und Meßeinrichtung vorgesehenen Anschlag (32) auf die Werkzeugspindel (2) aufgeschoben und an dieser zentriert ist.

3. Vorrichtung nach Anspruch 1,
**dadurch gekennzeichnet,** daß
- der Werkzeuganschlag (8) in an sich bekannter Weise ein in Längsrichtung der Werkzeugspindel (2) verstellbarer Gewindestift ist,
- das Stellmittel (12) einen zylindrischen Schaft (12a) aufweist, welcher in der Stell- und Meßeinrichtung in Längsrichtung des Schaftes (12a) verschieblich und um die Längsachse des Schaftes (12a) drehbar aufgenommen ist,
- der Schaft (12a) in der Gebrauchslage mit der Werkzeugspindel (2) fluchtet,
- an einander zugewandten Enden des Schafts (12a) und des Werkzeuganschlags (8) die Wirkverbindung im Sinne einer Verstellung des Werkzeuganschlags (8) längs der Werkzeugspindel (2) bei einer Verstellung des Stellmittels (12) herstellende lösbare, formschlüssige Kupplungsmittel vorgesehen sind.

4. Vorrichtung nach Anspruch 1,
**dadurch gekennzeichnet,**
daß die Stell- und Meßeinrichtung einen Kraftspeicher (26) aufweist, der das Stellmittel (12) in der Gebrauchslage gegen den Werkzeuganschlag (8) drückt.

5. Vorrichtung nach Anspruch 1,
**dadurch gekennzeichnet,**
daß das Stellmittel (12) ein von außerhalb der Stell- und Meßeinrichtung zugängliches Betätigungsteil (15) aufweist.

6. Vorrichtung nach Anspruch 1,
**dadurch gekennzeichnet,** daß
ein Taststift (24) des Tiefenmeßgeräts (23) in der Gebrauchslage mit der Werkzeugspindel (2) fluchtet und gegen ein dem Werkzeuganschlag (8) abgewandtes Ende des Stellmittels (12) angestellt ist.

## Claims

1. Apparatus for adjusting a tool stop (8), which is disposed centrically in a tool spindle (2) and is shiftable along it, by means of an adjusting means (12) which can be introduced, in place of a tool shank, into the tool spindle (2), the tool stop (8) having a stop face (10) for a tool shank which is insertable into the tool spindle (2), characterized in that
- the adjusting means (12) is integrated into a combined adjusting and measuring device, which, in a defined usage position relative to the tool spindle (2), can be fixed to the latter,
- the adjusting means (12) is received in the adjusting and measuring device such that, in the usage position of the latter, it can be brought into operative connection with the tool stop (8) with a view to shifting the tool stop (8) along the tool spindle (2) whenever the adjusting means (12) is shifted,
- the adjusting means (12), during the existence of the said operative connection, bears against the stop face (10),
and
- integrated within the adjusting and measuring device there is a digital depth gauge (23), by means of which, in the usage position, shifts which occur on the tool stop (8) along the tool spindle (2) can be sensed at the adjusting means (12).

2. Apparatus according to Claim 1, characterized in that the adjusting and measuring device has a hollow-cylindrical connecting piece (17), which, in the usage position, is fitted onto the tool spindle (2) up to a stop (32) provided on the adjusting and measuring device and is centred on the said tool spindle.

3. Apparatus according to Claim 1, characterized in that
- the tool stop (8), in a manner which is known per se, is a threaded pin which is shiftable in the longitudinal direction of the tool spindle (2),
- the adjusting means (12) has a cylindrical shank (12a), which is displaceable in the adjusting and measuring device in the longitudinal direction of the shank (12a) and is received rotatably about the longitudinal axis of the shank (12a),
- the shank (12a) is aligned, in the usage position, with the tool spindle (2),
- at mutually facing ends of the shank (12a) and of the tool stop (8) there are provided releasable, positive-locking coupling means, which create the operative connection with a view to shifting the tool stop (8) along the tool spindle (2) whenever the adjusting means (12) is shifted.

4. Apparatus according to Claim 1, characterized in that the adjusting and measuring device has an energy store (26), which forces the adjusting means (12), in the usage position, against the tool stop (8).

5. Apparatus according to Claim 1, characterized in that the adjusting means (12) has an actuating part (15) which is accessible from outside the adjusting and measuring device.

6. Apparatus according to Claim 1, characterized in that a sensing pin (24) of the depth gauge (23), in the usage position, is aligned with the tool spindle (2) and is positioned against an end of the adjusting means (12) facing away from the tool stop (8).

## Revendications

1. Dispositif de réglage d'une butée (8) d'outil, qui est disposée centralement dans une broche (2) pour outil et qui est déplacable le long de cette dernière, à l'aide d'un moyen de réglage (12) pouvant être introduit dans la broche (2) pour outil à la place d'une tige d'outil, la butée (8) d'outil comportant une surface de butée (10) pour une tige d'outil pouvant être montée dans la broche (2) pour outil,
caractérisé en ce que
- le moyen de réglage (12) est intégré dans un dispositif combiné de réglage et de mesure qui peut être fixé sur la broche (2) pour outil à une position définie d'utilisation par rapport à celle-ci,
- le moyen de réglage (12) est logé dans le dispositif de réglage et de mesure de manière qu'il puisse être mis à sa position d'utilisation en liaison fonctionnelle avec la butée (8) d'outil dans le sens d'un déplacement de la butée (8) d'outil le long de la broche (2) pour outil lors d'un déplacement du moyen de réglage (12),
- le moyen de réglage (12) est en appui contre la surface de butée (10) pendant qu'existe ladite liaison fonctionnelle, et
- un appareil numérique (23) de mesure de profondeur, à l'aide duquel, lorsqu'il est en position d'utilisation, des déplacements que subit la butée (8) d'outil le long de la broche (2) pour outil peuvent être palpés sur le moyen de réglage (12), est intégré dans le dispositif de réglage et de mesure.

2. Dispositif selon la revendication 1,
caractérisé en ce que
le dispositif de réglage et de mesure comprend un élément cylindrique creux de raccord (17) qui est enfilé en position d'utilisation sur la broche (2) pour outil jusqu'à une butée (32) prévue sur le dispositif de réglage et de mesure et qui est centré sur cette broche.

3. Dispositif selon la revendication 1,
caractérisé en ce que
- la butée (8) d'outil est de manière connue une vis sans tête déplaçable dans la direction de la longueur de la broche (2) pour outil,
- le moyen de réglage (12) comprend une tige cylindrique (12a) qui est déplaçable dans le dispositif de réglage et de mesure dans la direction de la longueur de la tige (12a) et qui est logée rotative autour de l'axe longitudinal de la tige (12a),
- la tige (12a) occupant la position d'utilisation est à l'alignement de la broche (2) pour outils,
- des organes d'accouplement par complémentarités de formes, qui sont libérables et qui établissent la liaison fonctionnelle dans le sens d'un déplacement de la butée (8) d'outil le long de la broche (2) pour outil lors d'un déplacement du moyen de réglage (12), sont prévus aux extrémités tournées l'une vers l'autre de la tige (12a) et de la butée (8) d'outil.

4. Dispositif selon la revendication 1,
caractérisé en ce que
le dispositif de réglage et de mesure comprend un accumulateur de force (26) qui pousse le moyen de réglage (12) en position d'utilisation contre la butée (8) d'outil.

5. Dispositif selon la revendication 1,
caractérisé en ce que
le moyen de réglage (12) comprend un organe d'actionnement (15) accessible par l'extérieur du dispositif de réglage et de mesure.

6. Dispositif selon la revendication 1,
caractérisé en ce que
une tige palpeuse (24) de l'appareil (23) de mesure de profondeur est en position d'utilisation à l'alignement de la broche (2) pour outil et mis en appui contre une extrémité du moyen de réglage (12) qui est tournée à l'opposée de la butée (8) d'outil.
